(19) Europäisches Patentamt / European Patent Office / Office européen des brevets

(11) **EP 2 000 676 B1**

(12) **EUROPEAN PATENT SPECIFICATION**

(45) Date of publication and mention
of the grant of the patent:
**27.12.2017 Bulletin 2017/52**

(51) Int Cl.:
*F04D 29/30* (2006.01)    *F04D 29/66* (2006.01)
*F24F 1/00* (2011.01)    *F04D 29/28* (2006.01)

(21) Application number: **07739907.9**

(22) Date of filing: **27.03.2007**

(86) International application number:
**PCT/JP2007/056469**

(87) International publication number:
**WO 2007/119532 (25.10.2007 Gazette 2007/43)**

(54) **TURBOFAN AND AIR CONDITIONER**

TURBOLÜFTER UND KLIMAANLAGE

TURBINE ET CONDITIONNEUR D'AIR

(84) Designated Contracting States:
**ES FR IT**

(30) Priority: **29.03.2006   JP 2006089740**

(43) Date of publication of application:
**10.12.2008   Bulletin 2008/50**

(73) Proprietor: **Toshiba Carrier Corporation
Tokyo 108-8580 (JP)**

(72) Inventors:
• **ISHIJIMA, Mitsuyoshi
Fuji-shi
 Shizuoka-ken 416-8521 (JP)**
• **KANAGAWA, Keiko
Fuji-shi
 Shizuoka-ken 416-8521 (JP)**

• **KOMIYAMA, Yoshihiro
Fuji-shi
Shizuoka-ken 416-8521 (JP)**

(74) Representative: **Hoffmann Eitle
Patent- und Rechtsanwälte PartmbB
Arabellastraße 30
81925 München (DE)**

(56) References cited:
GB-A- 859 815        GB-A- 1 078 112
JP-A- 07 012 094     JP-A- 11 351 194
JP-A- 2002 061 597   JP-A- 2002 243 188
JP-A- 2005 233 057   JP-A- 2006 002 689
JP-U- 06 022 597     US-A- 1 906 180
US-A- 4 531 890

**Description**

Technical Field

The present invention relates to a turbofan (also called a centrifugal fan) and a ceiling embedded type air conditioner provided with a turbofan.

Background Art

For example, in an indoor ceiling embedded type air conditioner, a turbofan is attached in the center of a chassis embedded in a ceiling, and a heat exchanger is disposed around the turbofan. A lower surface of the chassis is opened, and the opening is closed by a decorated panel. A suction port is provided in a central portion of the decorated panel, and an air outlet is provided in a surrounding portion.

When an air conditioning operation start signal is sent, the turbofan is rotated while a refrigerating cycle operation is started. Indoor air is sucked into the chassis through the suction port, and is radially blown from the turbofan. The indoor air passes through the heat exchanger, and heat exchange is performed between the indoor air and a coolant introduced to the heat exchanger. Then, the heat-exchanged air is blown to the room interior from the air outlet to establish indoor air conditioning.

With reference to the turbofan, for example, Jpn. Pat. Appln. KOKAI Publication No. 2001-132687 discloses a centrifugal fan. In the technique disclosed in Jpn. Pat. Appln. KOKAI Publication No. 2001-132687, plural vanes are provided along a rotation radius direction between a main plate and a shroud, a thickness of the vane is gradually increased from the shroud toward the main plate, and a distance between vanes adjacent to each other is gradually decreased from the shroud toward the main plate.

Additionally, GB 1,078,112 A discloses an impeller blade for a rotor having its radially-inwardly-facing surface formed with a chordal contour comprising three curved parts, each of substantial chordal extent, the parts being an intermediate concave part and convex leading and trailing edge parts which extend from the intermediate concave part respectively towards the leading edge and towards the trailing edge of the blade.

Disclosure of Invention

Because a motor which rotates the fan is disposed in the central portion of the turbofan, it is necessary to provide a hub having a recess shape in section. Therefore, the turbofan has a complicated configuration compared with a generally-used axial fan.

Specifically, airflow of the turbofan is a three-dimensional flow which is substantially perpendicularly curved from the suction side of the shroud, and the airflow is introduced to the air outlet side of the vane. Therefore, there are generated the following problems.

1. When the fan diameter is made smaller in order to reduce the size thereof, the gap between the hub and the vanes becomes narrow to hardly ensure a wind passage, which leads to a reduced wind passage. Therefore, separation of the airflow is generated by the vanes, which causes a decreased static pressure and increased noise.

2. When an attachment angle of the vanes is set smaller in order to ensure a wind passage between the hub and the vanes, an air volume is inevitably decreased. On the other hand, when the number of revolutions of the fan is increased in order to increase the wind volume, the noise is increased.

3. When a vane chord length is set smaller in order to ensure the wind passage between the hub and the vane, a force for scooping out the wind (that is, a force for delivering the wind) becomes insufficient, which causes decreased static pressure and increased noise.

In view of the foregoing, an object of the invention is to provide a turbofan in which the separation of the airflow is inhibited, to achieve increased wind volume and noise reduction, and an air conditioner which is provided with such turbofan to achieve improved the heat-exchange efficiency.

In order to satisfy the object, a turbofan includes a hub which has a convex-shaped section and fixes a rotating shaft of a driving motor while the driving motor is covered with the hub; a main plate which is integrally provided along a circumferential edge of the hub; a shroud which is disposed apart from the main plate; and an impeller which is formed by a plurality of vanes provided between the shroud and the main plate, wherein each vane includes a recess portion and a curved portion, a shape on a negative-pressure surface side in a section cut in parallel with a surface direction of the main plate being recessed toward a positive-pressure surface side except for a leading edge portion which is an inner circumferential side, the curved portion being connected from the recess portion to an end edge of the leading edge portion and expanded toward the negative-pressure surface side, and a maximum thickness position of the curved portion is set at a position in a range of 10% to 30% of a vane chord length from a front end of a leading edge portion. Moreover, the leading edge portion of the vane from the main plate to the shroud is divided into two curved lines at an inflection point, and, when curvature radii of the respective curved lines are set at a main plate side R1 and a shroud side R2, the following expressions hold:

$$R1 > R2,\ R1 = \beta \times R2,\ \text{and}\ \beta = 5\ \text{to}\ 20.$$

In order to satisfy the object, an air conditioner according to another aspect of the invention includes a turbofan and a heat exchanger which is disposed in an outer circumferential portion of the turbofan.

Brief Description of Drawings

FIG. 1 is a longitudinal sectional view schematically showing a ceiling embedded type air conditioner indoor apparatus according to an embodiment according to the invention.

FIG. 2 is a front view showing an impeller of a turbofan of the embodiment.

FIG. 3 is a sectional view taken along a line A-A of FIG. 2 according to the embodiment, and is a transverse plan view of a vane.

FIG. 4 shows a noise level for a maximum thickness position of a curved portion U according to the embodiment.

FIG. 5 shows a noise level for a ratio of a curved portion maximum thickness Hu and a distance Hs according to the embodiment.

FIG. 6 is a plan view showing the impeller according to the embodiment in which a shroud is removed.

FIG. 7 is a partially enlarged view showing a vane leading edge portion and a hub according to the embodiment.

FIG. 8 shows a noise level for an angle θ formed between a tangential line FM and a tangential line FN according to the embodiment.

FIG. 9 is a perspective view showing the impeller according to the embodiment.

FIG. 10 is a front view showing the vane according to the embodiment.

FIG. 11 shows a noise level for a ratio of a curvature radius R1 and a curvature radius R2 according to the embodiment.

Best Mode for Carrying Out the Invention

An embodiment of the invention will be described below with reference to the drawings.

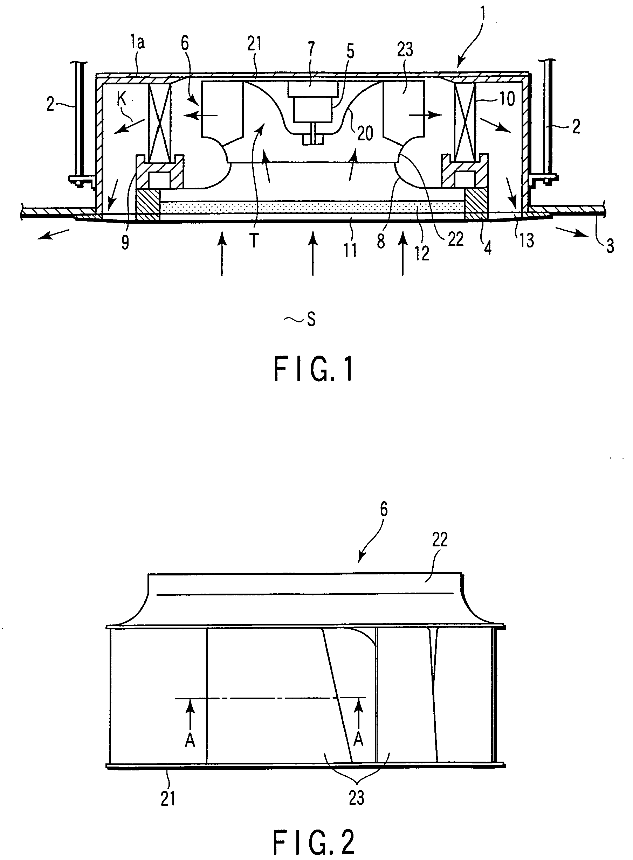

FIG. 1 is a longitudinal sectional view schematically showing a ceiling embedded type air conditioner indoor apparatus according to an embodiment of the invention.

A chassis 1, which is an indoor apparatus main body, is hung from a beam (not shown) under a roof via a lifting hook 2. An opening in which a lower surface portion of the chassis 1 is fitted is provided in a ceiling plate 3. The chassis 1 is located on the ceiling plate 3, and is embedded in the ceiling plate 3 when viewed from the room interior side S. The lower surface portion of the chassis 1 is opened, and the opening is closed by a decorated panel 4. The decorated panel 4 is exposed to the room interior S from the ceiling plate 3, and the opening and a surrounding portion which are provided in the ceiling plate 3 are covered with the decorated panel 4.

A turbofan T including a driving motor 5 and an impeller 6 is provided in the chassis 1. Specifically, a motor base 7 is attached to a central portion of an upper bottom 1a, which is an upper surface wall of the chassis 1 in FIG. 1, and the driving motor 5 is supported by the motor base 7. A rotating shaft of the driving motor 5 is projected downward, and the impeller 6 is attached to the projected rotating shaft.

A suction bell-mouth 8 is provided below the turbofan T, and drain pan 9 is disposed on an outer circumferential portion of the suction bell-mouth 8 and along an end edge. The drain pan 9 is provided along the circumference of the turbofan T, and a predetermined gap is formed between an outside end edge of the drain pan 9 and an inner circumferential wall of the chassis 1.

A heat exchanger 10 is placed on the drain pan 9, and an upper end face of the heat exchanger 10 is retained while contacting the chassis upper bottom 1a. More specifically, the heat exchanger 10 is interposed between the drain pan 9 and the chassis upper bottom 1a, and is disposed in the outer circumferential portion of the turbofan T. A predetermined gap is formed between an outside circumferential surface of the heat exchanger 10 and the inner circumferential wall of the chassis 1.

The central portion of the decorated panel 4 faces an opening end in a lower portion of the suction bell-mouth 8, a suction port 11 of the indoor air is provided in the central portion of the decorated panel 4, and a pre-filter 12 is fitted in the central portion of the decorated panel 4. In the decorated panel 4, an air outlet 13 is opened with a predetermined gap with the suction port 11. When the decorated panel 4 is formed into a rectangular shape, the suction port 11 is also formed into a rectangular shape, and the air outlet 13 is provided along each side portion of the suction port 11 or in a facing side portion.

The air outlet 13 is provided so as to be matched with a predetermined gap between the inner circumferential wall of the chassis 1 and the drain pan 9 disposed in the chassis 1, and the suction port 11 and the air outlet 13 are communicated with each other. Accordingly, when the turbofan T is rotated, the air is sucked in an axial direction of the turbofan T from the suction port 4 through the suction bell-mouth 8.

Therefore, an airflow passage K is formed. In the airflow passage K, the air is radially blown by the impeller 6, passes through heat exchanger 10, and is introduced to the air outlet 13 from the gap between the drain pan 9 and the inner circumferential wall of the chassis 1.

In the air conditioner indoor apparatus having the above-described configuration, when an air conditioning operation signal is sent, the driving motor 5 of the turbofan T is driven to rotate the impeller 6 while a refrigerating cycle operation is started. The air of the room interior S is sucked from the suction port 11 of the decorated panel 4, and passes through the pre-filter 12 to trap dust and the like contained in the air. Then, the air is introduced along the airflow passage K.

More specifically, the indoor air sucked from the suction port 11 is sucked in the axial direction of the impeller 6 through the suction bell-mouth 8, and the air stream is radially bent and blown out. The air passes through the heat exchanger 10 immediately after leaving the impeller 6, the heat exchange with a coolant introduced to the heat exchanger 10 is performed, and the air is heated in a heating operation or is cooled in a cooling operation.

Particularly, in the cooling operation, moisture contained in the air is condensed to produce drain water. The drain water drops on and is collected by the drain pan 9, and is finally drained to the outside of the room. The air on which the heat exchange is performed by the heat exchanger 10 is blown out from the air outlet 13 to the room interior S, thereby obtaining an air conditioning action of the room interior S. Although not shown, plural louvers are provided in the air outlet 13, so that the direction in which the air is blown to the room interior S can be adjusted.

The impeller 6 constituting the turbofan T will be described below.

The impeller 6 includes a hub 20, a main plate 21, a shroud 22, and plural vanes 23. The driving motor 5 is covered with the hub 20 having a projected shape in section, and the hub 20 fixes the rotating shaft of the driving motor 5. The main plate 21 is integrally provided along a circumferential edge of a base end portion of the hub 20. The shroud 22 is disposed to be separate from the main plate 21. Plural vanes 23 are provided between the shroud 22 and the main plate 21.

The air is sucked in the axial direction of the impeller 6 through the shroud 22, which is provided facing the suction bell-mouth 8, by rotating the impeller 6. The air flows into the impeller 6 and the air stream is bent from the axial direction to the radial direction, namely, the air traverses the vanes 23, and is blown out.

The impeller 6 constituting the turbofan T has the following features.

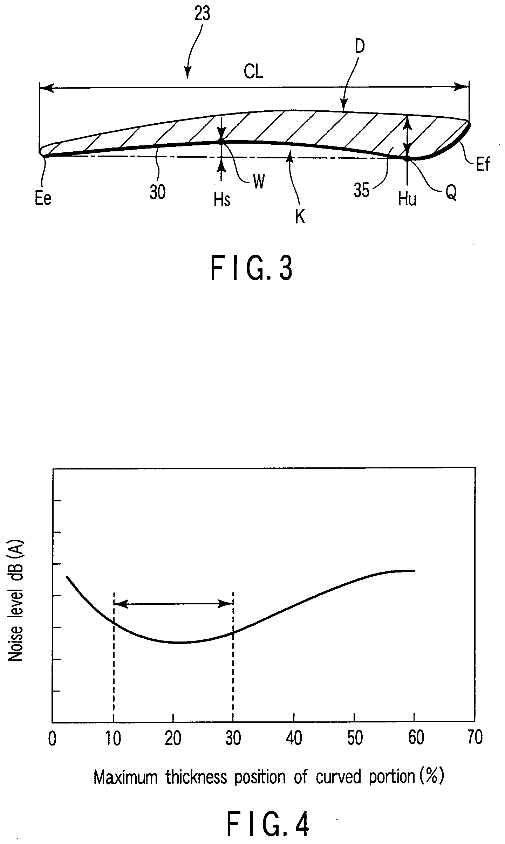

FIG. 2 is a front view showing the impeller 6 when the state in which the turbofan T is attached to the inside of the chassis 1 is turned upside down. FIG. 3 is a sectional view showing the vane 23 taken along a line A-A of FIG. 2. FIG. 4 shows a noise level and a maximum thickness position Q of a curved portion U for a vane chord length CL.

The vane 23 constituting the impeller 6 is cut along the A-A line, which is the direction parallel to surface directions of the main plate 21 and shroud 22 as shown in FIG. 2, thereby obtaining the sectional shape shown in FIG. 3 of the vane 23.

In the state in which the impeller 6 is rotated, an upper surface in FIG. 3 becomes a positive-pressure surface D, and a lower surface becomes a negative-pressure surface K. A thick portion shown on the right of FIG. 3 constitutes a leading edge portion Ef, which is an inner circumferential side of the impeller 6, and a thin portion shown on the left constitutes a trailing edge portion Ee, which is an outer circumferential side.

In the sectional shape of the vane 23, the sectional shape of the negative-pressure surface K has not a simply arc curved line but a gently meandering curved line. More specifically, a substantially arc curved line (however, it is not always necessary to form the vane 23 into an arc shape, and other curved shapes may be formed) is formed from the end edge of the trailing edge portion Ee of the vane negative-pressure surface K to a region close to the leading edge portion Ef, and a recess portion 30 recessed toward the side of positive-pressure surface D is formed. A curved portion 35 expanded toward the side of the negative-pressure surface K, which is in a direction opposite to the positive-pressure surface D, is continuously provided from the region close to the leading edge portion Ef of the recess portion 30 to the end edge of the leading edge portion Ef.

One of the features is that the maximum thickness position Q of the curved portion 35 is set in a range of 10% to 30% from an end edge of the leading edge portion Ef with respect to the vane chord length CL, which is the total length of the vane 23.

As shown in FIG. 4, this is the result obtained from the view in which the maximum thickness position Q (%) of the curved portion 35 is the horizontal axis while the noise level is the vertical axis. As used herein, the "noise level dB (A)" of the vertical axis shall mean a value measured by "A characteristic" of a noise meter, specifically, a value in which a sound pressure level (in "dB" units) is corrected in accordance with the human auditory sense.

As described above, the shape on the side of the negative-pressure surface K of the vane 23 includes the recess portion 30 recessed toward the side of the positive-pressure surface D and the curved portion 35 which is connected to the recess portion 30 and expanded toward the side of the negative-pressure surface K. The maximum thickness position Q of the curved portion 35 is set in the range of 10% to 30% from the end edge of the leading edge portion Ef with respect to the vane chord length CL. Therefore, the airflow separation generated between the hub 20 and the vane 23 can be inhibited to achieve a noise reduction.

As shown in FIG. 3, assuming that Hu is the maximum thickness of the curved portion 35 and Hs is a distance between a tangential line connecting the maximum projected region Q of the curved portion 35 and the tailing edge portion Ee of the vane 23, and the maximum recess position W, which is the center of the recess portion 30, the vane 23 is formed such that the following equation holds:

$$Hu = \alpha \times Hs \quad (\alpha = 2 \text{ to } 3.5)$$

That is, the vane 23 is made according to the following:

$$Hu = (2 \text{ to } 3.5) \cdot Hs$$

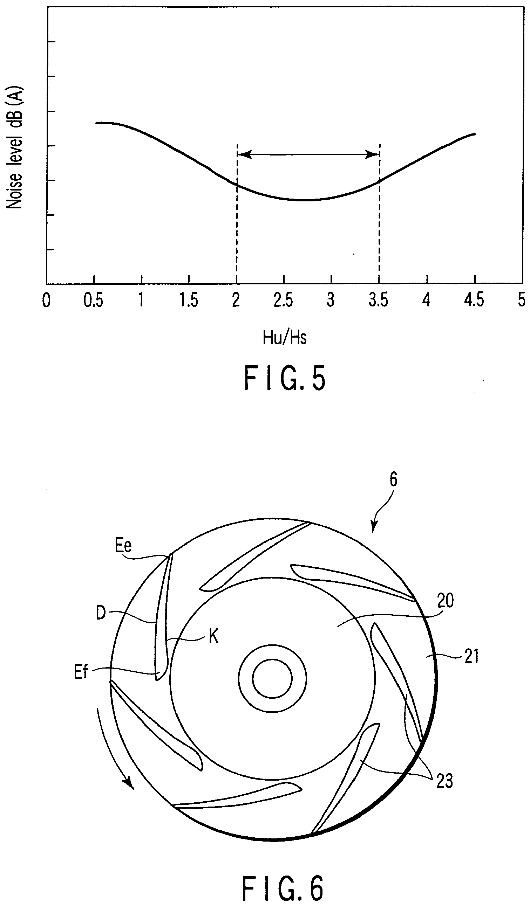

As shown in FIG. 5, this is the result obtained from the view in which a ratio (Hu/Hs) of the maximum thickness Hu of the curved portion 35 and the distance Hs is the horizontal axis while the noise level is the vertical axis.

As described above, assuming that Hu is the maximum thickness of the curved portion 35 and Hs is the distance between the tangential line connecting the maximum projected region Q of the curved portion 35 and the trailing edge portion Ee and the maximum recess position W of the recess portion 30, the vane 23 is made according to the following:

$$Hu=(2 \text{ to } 3.5)\cdot Hs$$

Therefore, a wind passage can be ensured between the hub 20 and the vane 23 without decreasing the attachment angle of the vane 23, thereby inhibiting the decreased air volume to achieve a noise reduction.

FIG. 6 is a plan view showing the impeller 6 in the state in which the shroud 22 is removed, and the hub 20, the main plate 21, and the vane 23 are shown in FIG. 6. In the impeller 6, it is assumed that the seven vanes 23 are attached to the main plate 21 while inclined at a predetermined angle relative to the inner circumferential surface of the hub 20. It is also assumed that the impeller 6 is rotated counterclockwise. Accordingly, in the one vane 23, a front end on the inner circumferential side becomes the thick leading edge portion Ef, and a rear end on the outer circumferential side becomes the thin trailing edge portion Ee.

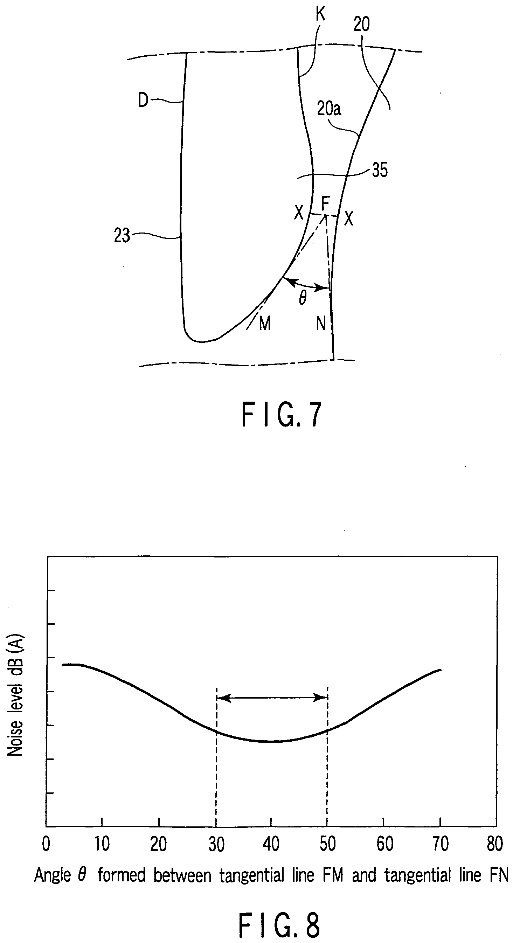

As shown in FIG. 7, in each of the vanes 23, in the case of the minimum distance of 20 mm or less between the hub 20 and the curved portion 35 provided in the leading edge portion Ef of the vane negative-pressure surface K, an angle θ formed between a tangential line FM and a tangential line FN is set in a range of 30° to 50°. The tangential line FM intersects a line segment X-X which becomes the minimum distance at a point F on the line segment X-X, and the tangential line FM is tangential to the curved portion 35. The tangential line FN is tangential to a contour 20a of the hub 20.

As shown in FIG. 8, this is the result obtained from the view in which the angle θ formed between the tangential line FM and the tangential line FN is the horizontal axis while the noise level is the vertical axis.

As described above, the minimum distance between the curved portion 35 and the hub 20 is set at 20 mm or less, and the angle θ formed between the tangential line FM of the vane 23 and the tangential line FN of the hub 20 is set in a range of 30° to 50°. The tangential line FM is drawn from the point F on the line segment connecting the curved portion 35 and the hub 20 with the minimum distance. Therefore, the wind passage can be ensured between the hub 20 and the vane 23, and decreased air volume is inhibited to achieve a noise reduction.

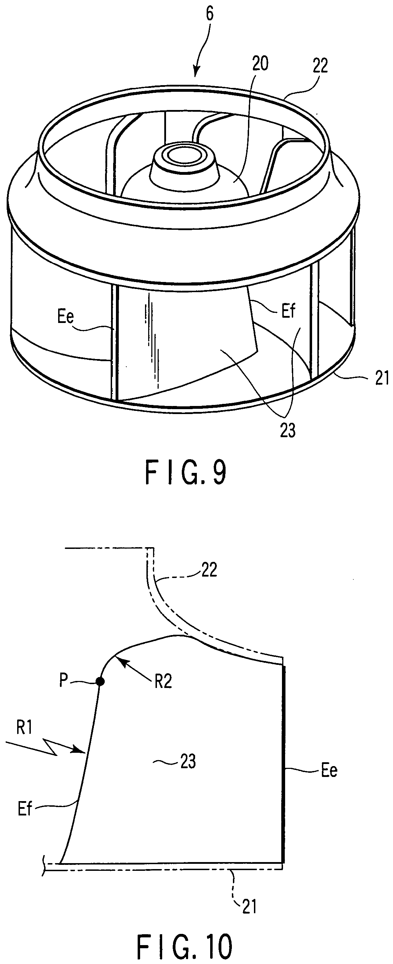

FIG. 9 is a perspective view of the impeller 6. Similarly to the example of FIG. 2, FIG. 9 shows the impeller 6 attached to the chassis 1 of the actual air conditioner from the reverse side. Accordingly, the shroud 22 is located on the upper portion side of FIG. 9, the main plate 21 is provided on the down portion side, and the plural vanes 23 are interposed between the shroud 22 and the main plate 21. The outer circumferential edge sides of the shroud 22 and main plate 21 become the side of the trailing edge portion Ee in the vane 23, and the inner circumferential sides of the shroud 22 and main plate 21 become the side of the leading edge portion Ef in the vane 23.

FIG. 10 is a front view showing the one vane 23, and shows the state in which the main plate 21 is attached to the lower portion side while the shroud 22 is attached to the upper portion side in accordance with FIG. 9. Accordingly, a longitudinal line on the right side of FIG. 10 becomes the trailing edge portion Ee, and the curved line on the left side becomes the leading edge portion Ef.

Particularly, in the vane leading edge portion Ef, an orientation of the curved line from the side of the main plate 21 and an orientation of the curved line from the side of the shroud 22 become opposite to each other, and a position (point) where the curved lines are coupled is referred to as inflection point P.

That is, the center (not shown) of the arc formed from the side of the main plate 21 is located inside (left side of FIG. 10) the vane leading edge portion Ef, and the arc has an extremely large curvature radius R1. The arc, which is formed from the side of the shroud 22 and coupled to the arc on the side of the main plate 21 through the inflection point P, has a curvature radius R2 whose center position is located on the vane 23. The arc curvature radius R2 on the side of the shroud 22 is formed smaller than the arc curvature radius R1 on the side of the main plate 21 (R1>R2).

The curvature radius R1 is set at a value in which the curvature radius R2 is multiplied by a predetermined value β. At this point, the predetermined value β is set in a range of 5 to 20.

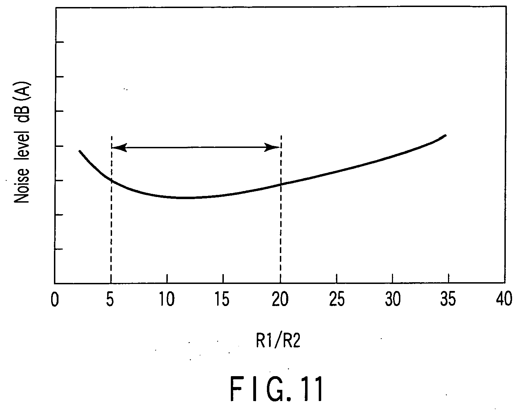

As shown in FIG. 11, this is the result obtained from the view in which a ratio (R1/R2) of the curvature radius R2 to the curvature radius R1 is the horizontal axis while the noise level is the vertical axis.

Thus, the leading edge portion Ef of the vane 23 from the main plate 21 to the shroud 22 is divided into two curved lines at the inflection point P, and when the curvature radii of the curved lines are set at the main plate side R1 and a shroud side R2 respectively, letting

$$R1>R2, \quad R1=\beta\times R2, \text{ and } \beta=5 \text{ to } 20$$

ensures the wind passage in the vane leading edge portion Ef, so that airflow separation can be inhibited, to achieve a noise reduction.

The invention is not limited to the above-described embodiment, but various modifications of the constituents can be made without departing from the scope of the invention, which is defined by the appended claims.

Industrial Applicability

Accordingly, the present invention can provide a turbofan in which air separation is inhibited, to achieve increased flow volume and noise reduction, and an air conditioner which is provided with a turbofan to enhance the heat-exchange efficiency.

**Claims**

1. A turbofan comprising:

   a hub (20) which has a convex-shaped section and fixes a rotating shaft of a driving motor (5) while the driving motor (5) is covered with the hub (20);
   a main plate (21) which is integrally provided along a circumferential edge of the hub (20);
   a shroud (22) which is disposed apart from the main plate (21); and
   an impeller (6) which is formed by a plurality of vanes (23) provided between the shroud (22) and the main plate (21), wherein each vane (23) includes a recess portion (30) and a curved portion (35), a shape on a negative-pressure surface (K) side in a section cut in parallel with a surface direction of the main plate (21) being recessed toward a positive-pressure surface (D) side except for a leading edge portion (Ef) which is an inner circumferential side, the curved portion (35) being connected from the recess portion (30) to an end edge of the leading edge portion (Ef) and expanded toward the negative-pressure surface side (K), and
   a maximum thickness position (Q) of the curved portion (35) is set at a position in a range of 10% to 30% of a vane chord length (CL) from a front end of the leading edge portion (Ef), and
   the leading edge portion (Ef) of the vane (23) from the main plate (21) to the shroud (22) is divided into two curved lines at an inflection point (P), and, when curvature radii of the respective curved lines are set at a main plate (21) side R1 and a shroud (22) side R2, the following expressions hold:

   $R1>R2$, $R1=\beta \times R2$, and $\beta$=5 to 20.

2. An air conditioner **characterized by** comprising:

   the turbofan (T) according to claim 1; and

a heat exchanger (10) which is disposed in an outer circumferential portion of the turbofan (T).

**Patentansprüche**

1. Mantelstromtriebwerk, umfassend:

   eine Nabe (20), die einen konvexförmigen Abschnitt besitzt und eine Drehwelle eines Antriebsmotors (5) fixiert, während der Antriebsmotor (5) mit der Nabe (20) abgedeckt ist;
   eine Hauptplatte (21), die entlang einer Umfangskante der Nabe (20) zusammenhängend bereitgestellt ist;
   eine Ummantelung (22), die entfernt von der Hauptplatte (21) angeordnet ist; und
   ein Flügelrad (6), das durch eine Vielzahl von Schaufeln (23) gebildet ist, die zwischen der Ummantelung (22) und der Hauptplatte (21) bereitgestellt sind,
   wobei
   jede Schaufel (23) einen Aussparungsbereich (30) und einen gekrümmten Bereich (35) aufweist, wobei eine Form auf einer Negativdruckoberflächen(K)-Seite mit Ausnahme eines Vorderkantenbereichs (Ef), der eine innere Umfangsseite ist, in einem Querschnitt parallel zu einer Oberflächenrichtung der Hauptplatte (21) zu einer Positivdruckoberflächenseite (D) hin ausgespart ist, wobei der gekrümmte Bereich (35) von dem Aussparungsbereich (30) mit einer Endkante des Vorderkantenbereichs (Ef) verbunden und zu der Negativdruckoberflächenseite (K) hin aufgeweitet ist, und
   eine maximale Dicke-Position (Q) des gekrümmten Bereichs (35) an einer Position in einem Bereich von 10% bis 30% einer Schaufelsehnenlänge (CL) von einem vorderen Ende des Vorderkantenbereichs (Ef) aus festgelegt ist, und
   der Vorderkantenbereich (Ef) der Schaufel (23) von der Hauptplatte (21) zur Ummantelung (22) an einem Wendepunkt (P) in zwei gekrümmte Linien unterteilt ist und, wenn Krümmungsradien der jeweiligen gekrümmten Linien an einer Seite R1 der Hauptplatte (21) und einer Seite R2 der Ummantelung (22) festgelegt werden, die folgenden Ausdrücke gelten:

   $R1>R2$, $R1=\beta x R2$, und $\beta$=5 bis 20.

2. Klimaanlage, **dadurch gekennzeichnet, dass** sie Folgendes umfasst:

   das Mantelstromtriebwerk (T) nach Anspruch 1; und
   einen Wärmetauscher (10), der in einem äußeren Umfangsbereich des Mantelstromtriebwerks (T) angeordnet ist.

**Revendications**

1.  Réacteur à double flux comprenant :

    un moyeu (20) qui a une section de forme convexe et fixe un arbre rotatif d'un moteur d'entraînement (5) alors que le moteur d'entraînement (5) est couvert avec le moyeu (20) ;
    une plaque principale (21) qui est prévue de manière solidaire le long d'un bord circonférentiel du moyeu (20) ;
    un flasque (22) qui est disposé à distance de la plaque principale (21) ; et
    un impulseur (6) qui est formé par une pluralité de pales (23) prévues entre le flasque (22) et la plaque principale (21),
    dans lequel :

    chaque pale (23) comprend une partie d'évidement (30) et une partie incurvée (35), une forme du côté de la surface de pression négative (K) dans une section coupée parallèlement à une direction de surface de la plaque principale (21), étant évidée vers le côté de la surface de pression positive (D) excepté pour une partie de bord d'attaque (Ef) qui est un côté circonférentiel interne, la partie incurvée (35) étant raccordée de la partie d'évidement (30) à un bord d'extrémité de la partie de bord d'attaque (Ef) et expansée vers le côté de surface de pression négative (K), et
    une position d'épaisseur maximum (Q) de la partie incurvée (35) est placée dans une position dans une plage de 10 % à 30 % d'une longueur de corde de pale (CL) à partir d'une extrémité avant de la partie de bord d'attaque (Ef), et
    la partie de bord d'attaque (Ef) de la pale (23), de la plaque principale (21) au flasque (22), est divisée en deux lignes incurvées au niveau d'un point d'inflexion (P), et lorsque les rayons de courbure des lignes incurvées respectives sont placés du côté R1 de la plaque principale (21) et du côté R2 du flasque (22), les expressions suivantes se vérifient :

    $R1 > R2$, $R1 = \beta \times R2$ et $\beta = 5$ à $20$.

2.  Conditionneur d'air **caractérisé en ce qu'**il comprend :

    le réacteur à double flux (T) selon la revendication 1 ; et
    un échangeur de chaleur (10) qui est disposé dans une partie circonférentielle externe du réacteur à double flux (T) .

FIG.1

FIG.2

FIG. 3

Maximum thickness position of curved portion (%)

FIG. 4

FIG.5

FIG.6

FIG. 7

Angle $\theta$ formed between tangential line FM and tangential line FN

FIG. 8

6

20

22

Ee

Ef

21

23

FIG. 9

22

P

R2

R1

23

Ee

Ef

21

FIG. 10

F I G. 11

**EP 2 000 676 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001132687 A

- GB 1078112 A